Europäisches Patentamt

European Patent Office

Office européen des brevets

(11) Publication number: **0 154 395**
A2

(12) # EUROPEAN PATENT APPLICATION

(21) Application number: 85300466.1

(22) Date of filing: 24.01.85

(51) Int. Cl.⁴: **F 16 L 39/04**

(30) Priority: 24.01.84 CA 445921

(43) Date of publication of application:
11.09.85 Bulletin 85/37

(84) Designated Contracting States:
DE FR GB IT NL SE

(71) Applicant: Novacorp International Consulting Ltd.
801-7th Avenue S.W. P.O. Box 2535, Station "M"
Calgary Alberta T2P 2M6(CA)

(72) Inventor: Feller, Murrey D.
The Cones Sandy Lane
Cobham Surrey(GB)

(72) Inventor: Ostick, Colin
R.R. No. 6 Langley
British Columbia, V3A 4P9(CA)

(74) Representative: Gallafent, Richard John et al,
GALLAFENT & CO. 8 Staple Inn
London WCIV 7QH.(GB)

(54) High pressure swivel assemblies.

(57) A multi-passage swivel assembly, of particular use in floating oil production systems, provides fluid or gas flow while continuous or intermittent rotation occurs between a fixed inlet port e.g. a bore (26) in a fixed arbour (24) connected to a riser, and a rotating outlet port (32). The assembly contains clearance control rings (34, 36) that compensate for dimensional changes to allow high pressure operation. In operation, structural deflection of the control ring allows its inside surface to maintain contact with the surface of the arbour.

./...

Croydon Printing Company Ltd.

Figure 2

- 1 -

## High pressure swivel assemblies

This invention relates to high pressure swivel assemblies, particularly multiple passage swivel assemblies.

Known high pressure swivel assemblies which provide gas or liquid flow between a fixed inlet port and a rotating outlet port during rotation of the latter comprise a fixed central arbour, the arbour having at least at one bore therein, and a rotatable fluid take-off element mounted on the arbour and including an annular passageway communicating with the arbour bore and an outlet port in communication with the passageway.

Such assemblies are of use in many areas where it is required to pass abrasive or corrosive fluids under pressure through a swivel, particularly in floating oil production systems.

The advent of floating production systems has produced a variety of single-point mooring methods in which a fixed production riser is connected to a surface vessel. These systems require swivel assemblies. The swivel assemblies are required because the riser remains in a fixed position while the vessel is free to rotate due to wind and current effects. Such swivel assemblies can be used in conjunction with the apparatus described in British Patent Specification 2135748A.

Existing swivel assembly systems using conventional seals technology have poor reliability and low pressure ratings. The seals rapidly break down because of accelerated wear caused by contaminants in the fluid being produced and the effects of dimensional instability. At high pressures, e.g. 700 kg/cm$^2$ and above, structural deflection is a major design problem. Seal retaining grooves must remain in close proximity to the sealing surface in order to maintain seal integrity.

In accordance with the invention, the problems associated with the existing systems are removed or alleviated by providing, in a swivel assembly of the type noted above, a pair of clearance control rings mounted on the inner surface of the take-off element, one above and one below the annular passageway and parallel thereto, each clearance control ring having at least one annular groove with a dynamic seal and "O" ring therein, the inner diameter of the control ring and the dynamic seal sealingly engaging the adjacent surface of the arbour and the arrangement being such that an unequal pressure distribution exists between the outside diameter and the inside diameter of the clearance control ring whereby any structural deflection of the control ring will cause the inside diameter of the clearance control ring to maintain contact with the surface of the arbour.

By using the clearance control rings, adverse structural deflections in the swivel assemblies can be controlled. The arrangement of the present invention also enables seal surfaces to be continuously cleaned with a lubricating fluid. This significantly increases the life of the seals and improves overall system reliability. The ability to protect the seals from abrasive contaminants is especially important in oil production systems, but the general principle embodied in the invention may be applied to many other areas of industry.

The structure of the invention also reduces an additional problem which exists in present designs in that the type of seals used are pressure energised.

Accordingly, as pressure increases, seal friction increases. The problem this creates in prior art swivels is that a large break-out torque is needed to operate the swivel. Using the system of the invention, a pressure balancing system can be used to activate the clearance control rings, which gives smaller pressure differentials in the intermediate passes of the swivel. This in turn significantly lowers stress levels, e.g. in the production riser if the swivel is mounted with its arbour secured thereto.

The use of the swivel assembly of the present invention will permit floating production systems to be used in high pressure applications which were previously not capable of being arranged to effect production using the single-point moor method.

The invention is illustrated by way of example with reference to oil production systems and in the accompanying drawings in which:

Figure 1 is an elevation view of a composite riser, multi-pass swivel assembly;

Figure 2 is a perspective view of a swivel assembly used in the composite arrangement of Figure 1;

Figure 3 is a sectional, fragmentary view of a portion of one embodiment of a seal arrangement in a swivel assembly according to the present invention;

Figure 4 is a sectional view through a composite swivel assembly; and

Figure 5 is a view similar to Figure 3 and showing another seal arrangement.

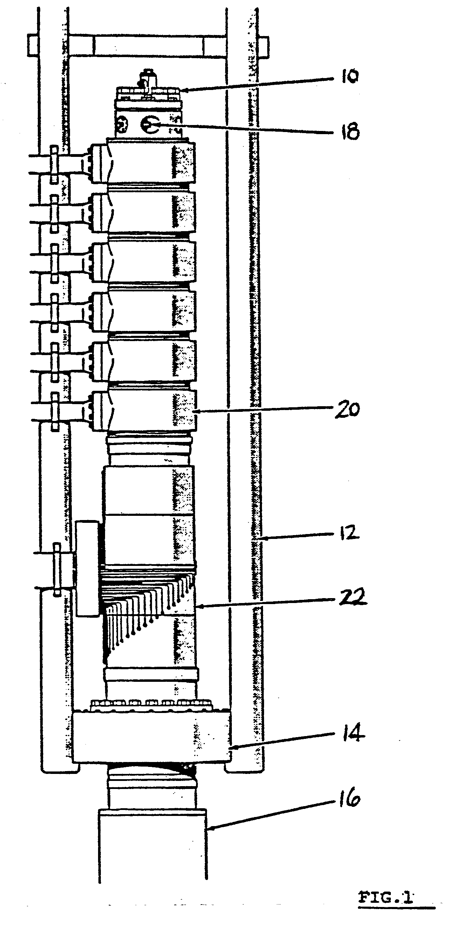

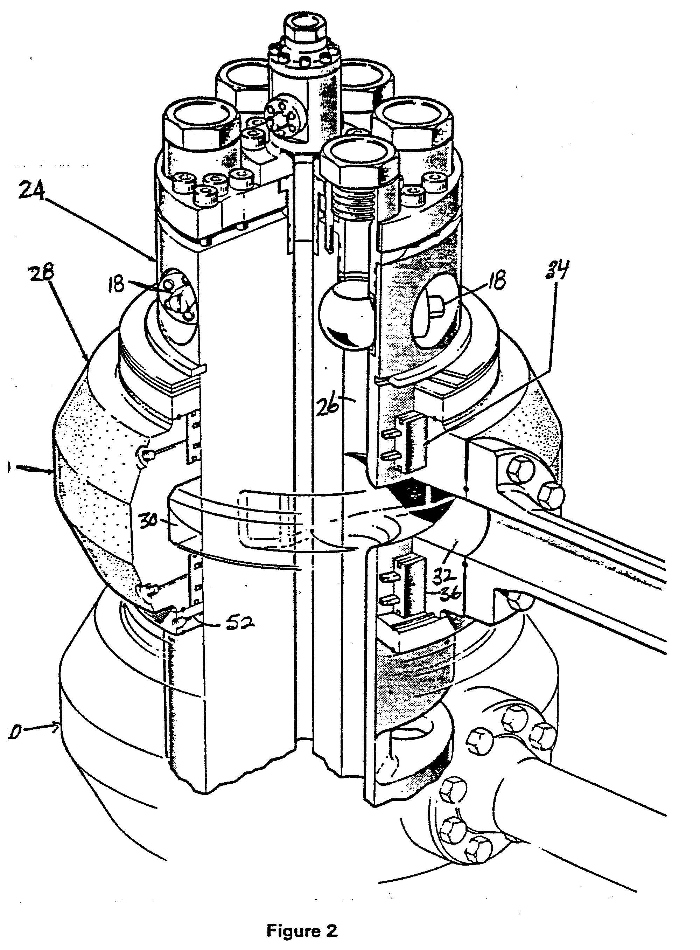

Referring to Figure 1, a multi-pass swivel assembly 10 is made up of fixed and rotating components. A riser tensioning support 12 includes a thrust bearing support assembly 14 secured to a riser connector 16 as illustrated. The upper end of the assembly includes vertical access shut off valves 18 and a series of production line swivel assemblies such as 20 are stacked one upon the other.  A control lines swivel arrangement 22 is also included.  Referring to Figure 2, two swivel assemblies 20 are shown mounted on a central arbour 24 which is fixed relative to the production riser 16 (Figure 1).  The arbour has at least one central bore 26 therein which connects with the riser production tubing, not shown.  Each arbour bore 26 connects with a rotating fluid take-off element 28 which is mounted for rotation on the arbour 24 and which includes an annular passageway 30 that communicates with the arbour bore 26, both of which communicate with an outlet port 32.

Each take-off element 28 includes two clearance control rings 34, 36 and internal porting for pressure balance fluid.  As shown in Figure 2, control ring 34 is mounted above and ring 36 is mounted below the annular passageway 30 and parallel thereto.

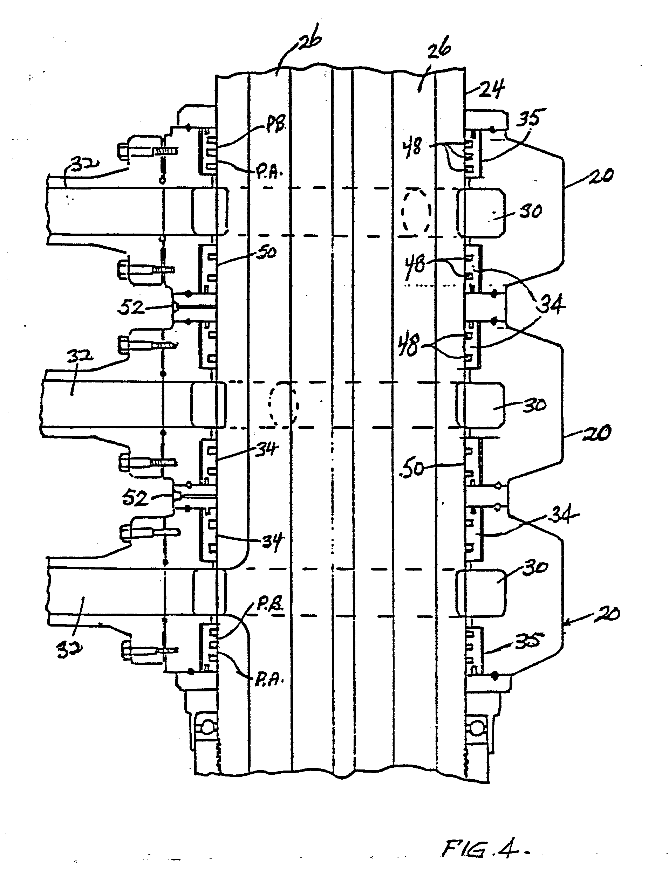

One embodiment of the control ring is shown in Figure 3.  A pressurised fluid PF surrounds the clearance control ring 34 from the pressurised side of a dynamic seal 38 and its associated O ring 40 to the pressurised side of a static seal 42.  It is assumed, for the purpose of description, that the downstream side of both seals is drained or maintained at a much lower pressure than the product flow.  Due to the unequal pressure distribution between the outside diameter and the indside diameter of the clearance control ring 34, a resulting structural deflection will cause the inside diameter 44 of the clearance control ring 34 to maintain contact with the adjacent surface of the arbour 24.  In this way, seal support is maintained and failure due to extrusion or loss of support due to excess clearance is prevented.  Various shapes of the clearance control ring 34 can be provided in combination with material selection in order to tailor the "foot print" pressure profile.  Additionally, bearing inserts 46 may be incorporated if the required properties are not present in the clearance control ring material itself.

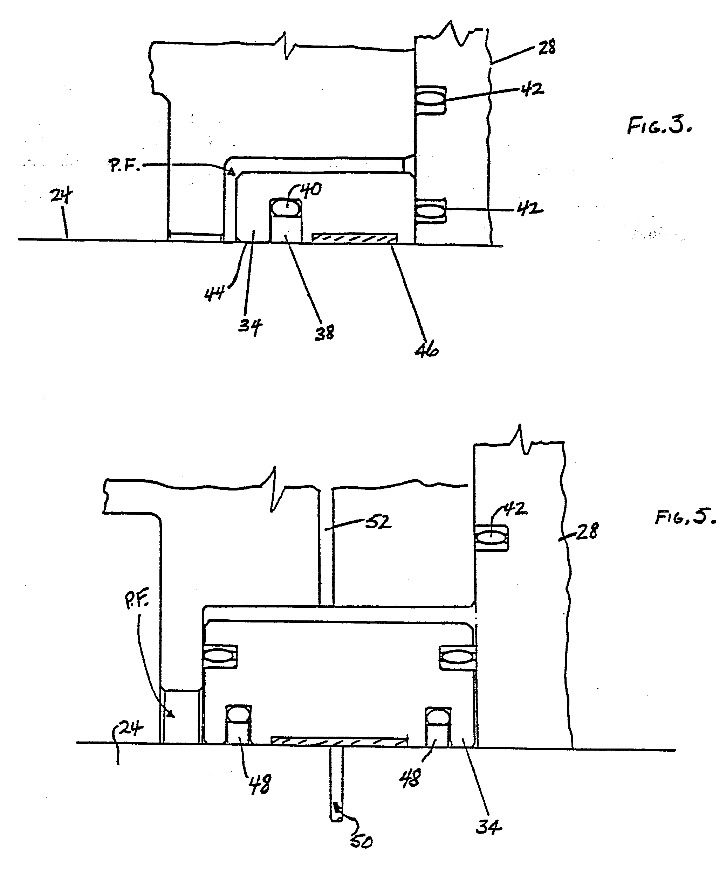

Referring to Figure 4, several take-off elements 20 are mounted on the arbour 24, the passageways 30 being in communication with the outlet ports 32. The clearance control rings are provided with two dynamic seals 48 and in this arrangement where the swivel assembly has three flow paths incorporating this feature, partial pressure balancing is utilised. Lubricating oil is introduced betwee the seals from galleries 50 (Figure 5) at a pressure below the product fluid. Further galleries 52 are maintained at a pressure which is at some increment below galleries 50.

Two principal advantages result from this arrangement. Firstly, reduced friction will be present bcause a relatively small pressure differential is maintained across centre-section seals. Since the seals are pressure energised, this will have an increasing advantage as additional centre-sections are added. Secondly, seals having pressure ratings lower than the product fluid pressure can be utilised because the pressure step across each seal can be maintained within a given tolerance. As shown in Figure 4, the two clearance control rings 35 at the extreme ends of the swivel contain three dynamic seals 48 illustrating both additional redundancy for containment of the produced fluid and additional pressure steps (if required) to reduce the pressure differential per·seal. Pressure PA if utilised either as an additional pressure step or as in common with PB.

The seal arangement shown in Figure 4 is illustrated in a preferred embodiment in Figure 5. In this case, one additional static seal is added to the clearance control ring. In the arrangement of Figure 5, clean lubricating oil is fed through galleries 52 at a pressure above the product pressure. Galleries 50 are also fed with a clean supply at a pressure below 52 but slightly higher than product pressure. This arrangement, because of the pressure differential described above, produces a controlled deflection of the clearance control ring 34. The advantage of this arrangement over that shown in Figure 4 is caused by the direction of leakage. In the arrangement of Figure 5, the leakage from the high pressure side to the low pressure side takes place with clean fluid moving across the seal. This results in purging of the of the seal surfaces of contaminant from the produced fluids permitting much longer life. The volume of lost fluid into the production flow will not be large. The economics of such a system, which now has additional complexity over conventional systems, will be justified in terms of enhanced reliability and new applications that the present invention makes possible. The auxiliary pressure balance and lubrication system will be designed to accommodate parallel components to permit replacement while the system is in service. Low duty cycle pumps and leakage monitoring equipment will ensure reliable operation and continuous indication of the state of the equipment.

No particular seal configuration is necessary to carry out the present invention; existing proprietary seals of various types may be used.

It will be appreciated that the present invention provides a pressure-actuated clearance control ring and a system of pressure compensation which prevents contaminated fluid from entering critical sealing areas. The invention also provides a method of reducing internal friction and thus generated torque.

CLAIMS

1.    A high pressure swivel assembly for providing gas or liquid to flow therethrough during rotation between a fixed inlet port and a rotating outlet port, the assembly comprising:
        a fixed central arbour (24) having at least one bore (26) therein; and
        a rotatable fluid takeoff element (28) mounted on the arbour and including an annular passageway (30) communicating with the arbour bore and an outlet port (32) in communication with the passageway, and characterised by
        a pair of clearance control rings (34, 36) mounted on the inner surface of the take-off element, one above and one below the annular passageway (30) and parallel thereto, each clearance control ring having at least one annular groove with a dynamic seal and "O" ring therein, the inner diameter of the control ring (44) and the dynamic seal (38) sealingly engaging the adjacent surface of the arbour, and the arrangement being such that an unequal pressure distribution exists between the outside diameter and the inside diameter of the clearance control ring whereby any structural deflection of the control ring will cause the inside diameter of the clearance control ring to maintain contact with the surface of the arbour.

2.    An assembly according to claim 1 and characterised by at least two dynamic seals (48) provided in the clearance control ring, and by galleries (50) in the arbour for introducing lubricating oil between the surfaces of the arbour and the control ring and intermediate the two dynamic seals (48).

3.    An assembly according to claim 2 and characterised by galleries (52) provided in the take-off element for feeding lubricating oil at a pressure above the product

0154395

pressure to the outer diameter of the clearance control
ring.

0154395

FIG.1

osite Riser Multi Pass Swivel

Figure 2

FIG.4.

0154395

FIG.3.

FIG.5.